# NOUVEAU FASCICULE DE BREVET EUROPEEN

(11) **EP 1 277 605 B2**
(45) Date de publication et mention de la décision concernant l'opposition: **16.06.2010**
(45) Mention de la délivrance du brevet: 02.08.2006
(21) Numéro de dépôt: 02024059.4
(22) Date de dépôt: 07.07.2000
(51) Int. Cl.: B60H 1/00

(54) **Installation de chauffage et notamment de chauffage-climatisation du type présentant un volet de mixage**
Heizungs- und Klimaanlage mit einer Luftmischklappe
Heating system, especially a heating and air-conditioning system with a mixing flap

(30) Priorité: 12.07.1999 FR 9908997
(43) Date de publication de la demande: 22.01.2003
(62) Demande divisionnaire de: 00949671.2
(73) Titulaire: VALEO SYSTEMES THERMIQUES, 78320 Le Mesnil Saint-Denis (FR)
(72) Inventeur: Vincent, Philippe, 28230 Epernon (FR)
(74) Mandataire: Léveillé, Christophe

(56) Documents cités:
- EP-B- 0 266 230
- DE-A- 2 407 751
- DE-A- 3 510 991
- DE-A- 19 631 371
- DE-C- 3 826 182
- FR-A- 2 562 845
- FR-A- 2 765 526
- FR-A- 2 773 112
- FR-B- 2 773 111
- RU-C- 2 128 589
- RU-U- 5 145
- SU-A- 1 452 716
- US-A- 5 135 046

## Description

La présente invention a pour objet une installation de chauffage et notamment de chauffage-climatisation comprenant notamment une entrée d'air, éventuellement pourvue d'un évaporateur traversé par de l'air provenant de l'entrée d'air, et un élément formant radiateur, ainsi qu'un volet de mixage déplaçable entre une première et une deuxième positions extrêmes, la première position correspondant à un passage direct de l'air provenant de l'entrée d'air, après traversée éventuelle dudit évaporateur, vers un circuit de distribution d'air pour former un flux d'air direct, la deuxième position correspondant à un passage dérivé de l'air provenant de l'entrée d'air à travers une ouverture qui alimente l'élément formant radiateur, avant d'atteindre le circuit de distribution d'air à travers un canal de dérivation situé en aval de l'élément formant radiateur pour constituer un flux d'air dérivé, des positions intermédiaires entre la première et la deuxième position permettant un mixage entre ledit flux d'air direct et ledit flux d'air dérivé.

Lorsque l'installation est une simple installation de chauffage, l'air provenant de l'entrée d'air alimente le flux d'air direct et/ou le flux d'air dérivé, ce qui permet de réaliser le mixage désiré. Lorsque l'installation est une installation de chauffage-climatisation, le flux d'air direct, aussi bien que le flux d'air dérivé, sont en général alimentés à partir d'air provenant de l'entrée d'air et qui sort de l'évaporateur.

Dans les installations de chauffage ou de chauffage-climatisation connues, le volet de mixage est du type papillon et il est articulé autour d'un axe porté par une extrémité d'une cloison séparatrice située entre l'élément formant radiateur et le canal de distribution. De telles installations sont connues des documents EP 0266230 b1.

Dans une première position du volet, une première partie du volet obture la dérivation de l'air vers l'élément formant radiateur, alors qu'une deuxième partie du volet obture la sortie du canal de distribution. Dans une deuxième position du volet, la première portion du volet obture le passage direct de l'air pour que le flux d'air provenant de l'entrée d'air (et éventuellement issu de l'évaporateur) soit dérivé entièrement vers l'élément formant radiateur alors que la deuxième partie du volet dégage entièrement la sortie du canal de distribution. Dans les positions intermédiaires entre ces deux positions, l'ouverture du volet permet de réaliser le mixage recherché entre le flux d'air direct et le flux d'air dérivé à travers l'élément formant radiateur.

Un inconvénient de ce type de dispositif est en particulier que la section du canal d'air disponible pour le flux d'air direct est relativement limitée, car elle est déterminée par les diménsions de la première partie du volet de mixage.

La présente invention a pour objet une installation de chauffage et notamment de chauffage-climatisation présentant un mixage sur l'air, et pour laquelle la section de passage du flux d'air direct ne présente plus la limitation précitée.

L'installation est ainsi caractérisée par l'objet de le revendication 1.

Au moins une desdites première et deuxième régions peut être plane. En particulier, la première région peut être plane et la deuxième région peut présenter un profil curviligne qui tourne sa concavité vers ledit canal de dérivation, le profil de la deuxième région étant par exemple, au moins en partie un arc de cercle.

Il est particulièrement avantageux que la deuxième région soit profilée de manière à autoriser un passage d'air de l'entrée d'air vers le canal de distribution dans au moins certaines positions intermédiaires entre la première et la deuxième position du volet de mixage.

En particulier, la deuxième région peut présenter à ses extrémités des régions formant butée d'étanchéité entre lesquelles est disposée une région rentrante en direction du canal de dérivation, pour autoriser ledit passage d'air vers le canal de distribution.

Selon une autre variante (profilée en S), la première région peut présenter un profil curviligne tournant sa concavité vers ladite entrée d'air (lorsque le volet de mixage est dans sa deuxième position) et la deuxième région peut présenter un profil curviligne tournant sa concavité vers ledit canal de dérivation (lorsque le volet de mixage est dans sa deuxième position), pour autoriser ledit passage d'air vers le canal de distribution.

Cette admission contrôlée de l'air dans le canal de dérivation permet, en créant de manière contrôlée un mélange partiel en amont du canal de distribution, d'améliorer le mélange entre le flux d'air direct et le flux d'air dérivé, et d'éviter au moins partiellement les phénomènes rencontrés avec les dispositifs de l'art antérieur, notamment la stratification.

Le dispositif selon l'invention peut également présenter un moyen pour orienter le flux d'air dérivé de manière à faciliter son mélange avec le flux d'air direct dans au moins une position intermédiaire du volet de mixage.

Ce moyen d'orientation peut être par exemple un déflecteur solidaire du volet s'étendant à partir de son axe de rotation.

Ce peut être également un deuxième volet dont l'axe de rotation est le même que celui du volet de mixage ou bien est décalé par rapport à celui du volet de mixage.

Le deuxième volet peut être du type drapeau. Ce volet du type drapeau peut présenter des positions extrêmes telles que l'extrémité du deuxième volet qui est opposée à son axe de rotation constitue, lorsque ledit volet est dans la première position, un bord de fuite ou bien selon une autre variante, un bord d'attaque pour la flux d'air dérivé qui le traverse.

Le deuxième volet peut être du type papillon ou bien encore du type tambour. Dans ce dernier cas, l'axe du deuxième volet du type tambour peut être disposé soit en amont de l'axe du volet de mixage dans le sens de propagation du flux d'air dérivé, soit en aval de celui-ci.

D'autres caractéristiques de l'invention apparaîtront à la lecture de la description qui va suivre, en liaison avec les dessins dans lesquels :
- la figure 1 représente une installation selon l'art antérieur,
- les figures 2 à 4 représentent respectivement un premier, un deuxième et un troisième mode de réalisation de l'invention,
- les figures 5a, 5b et 5c illustrent un quatrième mode de réalisation de l'invention, et
- les figures 6 à 10 représentent cinq modes de réalisation d'un dispositif selon l'invention pourvus de deux volets, à savoir un volet de mixage et un volet d'orientation pour faciliter le mélange entre le flux d'air direct et le flux d'air dérivé.

La description ci-après est relative à une installation de chauffage-climatisation qui présente une boucle frigorigène et donc un évaporateur, traversé par l'air provenant de l'entrée d'air. On notera que l'invention s'applique également à une installation de chauffage, dépourvue de boucle frigorigène, et donc d'évaporateur, et qui présente un mixage entre de l'air provenant de l'entrée d'air (flux direct) et un flux dérivé qui traverse un élément formant radiateur.

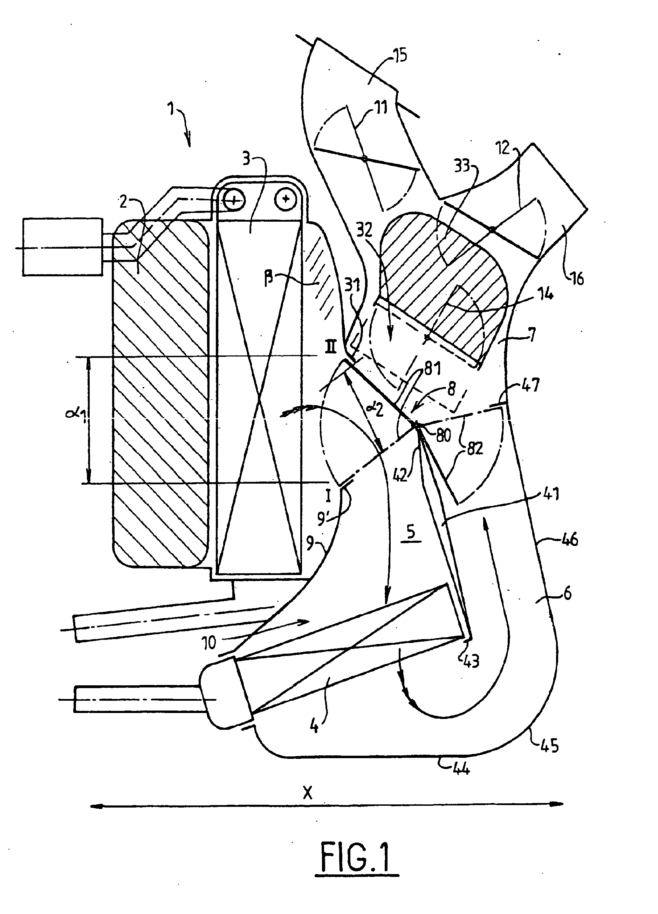

Le dispositif représenté à la figure 1, et désigné par le repère général 1, comporte une entrée d'air 2, axiale ou latérale, à partir de laquelle de l'air traverse un évaporateur 3 pour générer de l'air frais qui est ensuite envoyé dans l'habitacle du véhicule. Dans l'installation représentée, l'air qui sort de l'évaporateur 3 peut être dirigé directement sous forme d'un flux direct vers un circuit de distribution d'air qui peut comporter par exemple un conduit de dégivrage 15 et un conduit d'aération 16, dont l'alimentation est commandée par des vannes papillon respectivement 11 et 12. Une autre vanne papillon 14 peut être mise en oeuvre pour diriger l'air vers une sortie 33 en vue du chauffage des pieds des passagers du véhicule.

Pour des températures extérieures intermédiaires, pour lesquelles l'air froid sortant de l'évaporateur aurait une température trop froide s'il était envoyé tel quel dans l'habitacle, il est prévu d'utiliser un circuit de dérivation pour produire un flux d'air dérivé à travers un élément 4 formant radiateur de manière à obtenir un réchauffage d'une partie de l'air froid issu de l'évaporateur. A cet effet, les installations de l'art antérieur mettent en oeuvre un volet dit de mixage d'air 8 qui est articulé autour d'un axe 80 situé à une extrémité 42 d'une cloison séparatrice 41 du circuit de dérivation. Cette vanne papillon présente deux portions ou volets 81 et 82 et elle est déplaçable entre deux positions extrêmes I et II.

Dans la position I (en pointillés à la figure 1), la portion 81 du volet 8 ferme le circuit de dérivation et la portion 82 obture la sortie du canal 6 de dérivation situé en aval de l'élément 4 formant radiateur.

Dans la position II (illustrée en traits pleins à la figure 1), la portion 81 du volet 8 obture le passage du flux d'air issu de l'évaporateur 3 vers le circuit (15, 16, 33) de distribution d'air, alors que le volet 82 dégage la sortie du canal de dérivation 6.

Dans la position I, la portion 81 du volet 8 vient en butée en 9', et la portion 82 en 47. Dans la position II, l'extrémité de la portion 81 vient en butée en 31.

Les régions de butée 9' et 31 sont portées par une paroi 9, de contour par exemple curviligne, qui forme un rétrécissement du passage d'air en sortie de l'évaporateur 3. Elles sont séparées par une distance α1 qui est relativement réduite en raison de la géométrie du dispositif et du débattement possible du volet de type papillon. En outre, la distance α2 entre- l'axe 80 du volet et la région de butée 31 est limitée par la taille de la portion 81 du volet 80, laquelle est nécessairement réduite en raison de la position médiane de cet axe.

Dans la position II, l'air froid issu de l'évaporateur est dirigé dans un canal de dérivation 10 qui présente une région de canal 5 située en amont du radiateur 4, et après dérivation dans les bords 44 et 45 le flux d'air dérivé revient approximativement à 180° dans le canal de dérivation aval 6 et la portion de volet. 82. De manière classique, le réglage de la position du volet 80 entre les positions I et II permet de faire varier la proportion entre le flux d'air qui passe directement de l'évaporateur 3 au circuit de distribution et le flux d'air dérivé et réchauffé par le radiateur 4. Le mélange entre le flux d'air direct et le flux d'air dérivé s'effectue dans une chambre de mixage 32 située au niveau du circuit de distribution, en amont des sorties (15, 16, 33).

Un premier problème que pose cette installation est la limitation de la valeur de α1 et de α2. Un autre problème de ce dispositif de l'art antérieur est un mélange inhomogène dans la chambre de mixage 32 du circuit de distribution qui est située immédiatement en aval du volet 80, ce qui se traduit en particulier par une stratification de l'air qui reste composé de couches chaudes et froides au lieu de se répartir sous la forme d'un flux d'air de température homogène.

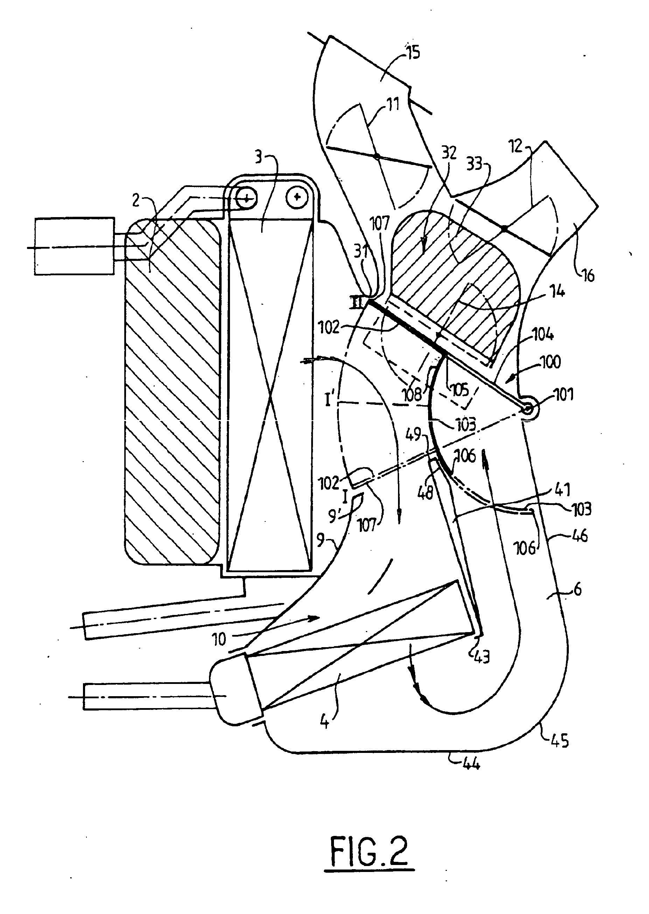

Comme le montre la figure 2, une première variante d'un dispositif selon l'invention présente un volet 100 dont l'axe de rotation 101 est situé au voisinage de la paroi 46 du canal de dérivation 6 opposée à l'évaporateur 3. Ce volet 100 présente, dans le mode de réalisation proposé, une première région 102 qui est plane et qui est coplanaire avec l'axe de rotation 101, et une deuxième région 103 formant un arc de cercle adjacent à la région 102 et qui, à son point de départ 105 présente une tangente perpendiculaire au plan de la région plane 102. Les régions 102 et 103 sont reliées à l'axe 101 par une tige ou une région plate 104.

Dans la position I représentée en pointillés, et correspondant à un flux d'air direct, l'extrémité 107 de la région 102 vient en butée en 9'. La région 102 vient également en butée à l'extrémité 49 de la cloison séparatrice 41 au voisinage immédiat du point 105 de départ de la deuxième région 103. Dans la position II. représentée en traits pleins, l'extrémité 107 de la région 102 vient en butée en 31 et l'extrémité 108 de la région en arc de cercle 103 longe étroitement une région incurvée 48 située à proximité de l'extrémité 49 de la cloison séparatrice 41.

Comme on le voit à la figure 2, la position I, représentée en pointillés, dégage un espace important pour le passage du flux direct sortant de l'évaporateur 3 puisque la côte α1 dépend des battements angulaires du volet 100 qui est améliorée d'une part par le fait que l'axe 101 n'est plus médian mais situé au voisinage de la paroi 46, et d'autre part par le fait que la disposition du volet 103 est plus favorable à des débattements angulaires importants. En outre, la disposition du volet 100 dégage entièrement la côte α2 dans la position I. Cette augmentation importante des côtes α1 et α2 permet d'atténuer d'une manière importante les pertes de charge pour le flux d'air direct, et d'augmenter le volume effectif de la chambre de mixage 32.

Dans des positions intermédiaires, par exemple la position I', l'extrémité 106 du volet 103 se déplace progressivement pour venir plus ou moins obturer le canal de distribution 106 et influer donc sur la quantité d'air dérivé qui est mélangée avec le flux d'air direct. Ce mélange est plus ou moins modulé également par la position du volet 102 qui vient plus ou moins s'interposer et diviser le flux d'air sortant de l'évaporateur 3.

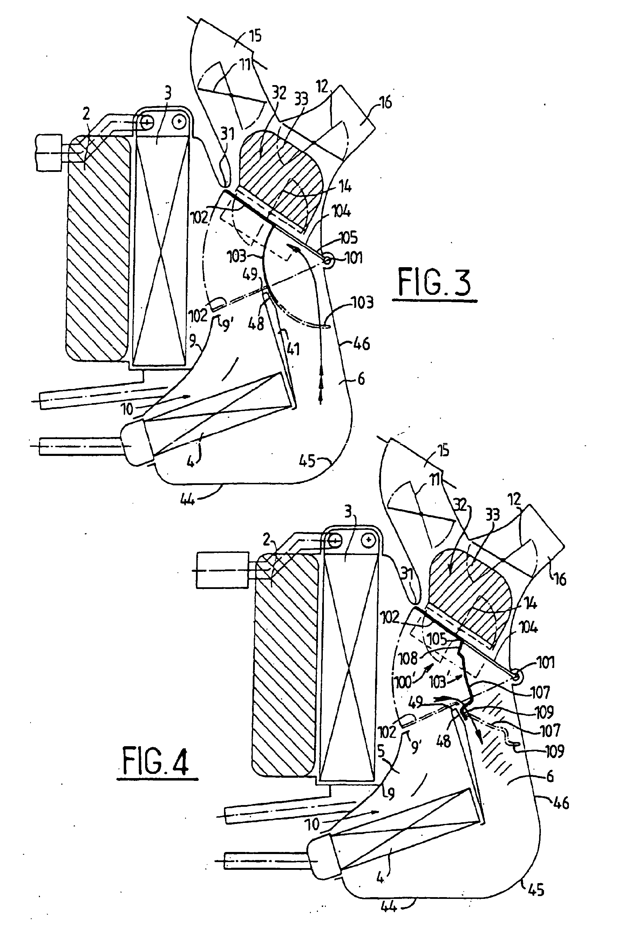

Le mode de réalisation de la figure 3 se distingue par le fait que la tige 104 présente à sa naissance une région 105 formant un petit volet qui vient dériver le flux sortant du canal 6 en direction du flux direct issu de l'évaporateur 3, de manière à faciliter le mélange entre ces deux flux dans la chambre de mixage 32 et à éviter au moins partiellement le phénomène de stratification évoqué ci-dessus.

Dans le mode de réalisation de la figure 4, d'ailleurs éventuellement combinable avec le mode de réalisation de la figure 3, le volet 100' présente une deuxième région 103' profilée de manière à présenter une région de butée 108 pour la position I, une région de butée 109 pour la position II, alors que, la région 107 située entre ces deux butées est en retrait en direction de la paroi 46, c'est-à-dire à l'opposé du flux d'air issu de l'évaporateur 3 de sorte que, dans les positions intermédiaires du volet 100', une partie de l'air sortant de l'évaporateur 3 passe entre la région 107 et la région de butée incurvée 48 et s'introduit directement dans le canal de dérivation aval 6 où il se mélange avec le flux d'air dérivé sortant du radiateur 4.

Du fait que le passage entre la région 107 et la région de butée incurvée 48 est relativement étroit, ceci induit une perte de charge contrôlée pour le flux d'air direct ce qui est favorable au mélange. En effet, le flux d'air dérivé subit également une perte de charge due à son passage par le canal de dérivation amont 5, le radiateur 4 et son changement de direction par le profil 45 et la perte de charge contrôlée du flux d'air direct permet d'en abaisser la pression pour la rendre proche de celle du flux d'air dérivé.

Dans ce mode de réalisation, il y a donc trois passages d'air, un passage direct entré le volet 102 et la butée 31, un passage dérivé vers les canaux de dérivation amont 5 et aval 6, et un passage dérivé entre les régions 48 et 107 et. Il y a également deux zones de mélange entre le flux direct et le flux dérivé, d'où une augmentation du volume dans lequel se produit le mélange entre les flux d'air direct et dérivé, ce qui contribue également à la diminution des phénomènes parasites, notamment de stratification.

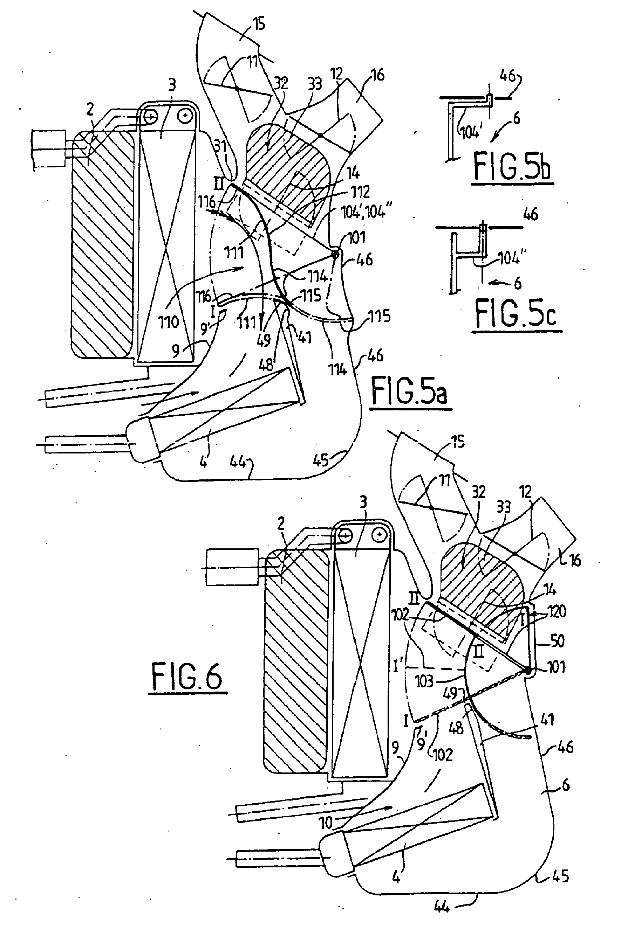

Le mode de réalisation représenté aux figures 5a à 5c est une variante du précédent. Il s'en distingue par la forme du volet 110, qui est un S inversé (sur le dessin) présentant une première région 111 dont la concavité est tournée vers l'évaporateur 3, un point d'inflexion 112, et une deuxième région 114 dont la concavité est tournée vers l'axe de rotation 101 situé au voisinage de la paroi 46. L'extrémité 116 sert de butée en 9' de la position I et en 31 pour la position II. L'extrémité 115 sert de butée en 48 pour la position II (représentée en traits pleins). Pour les positions intermédiaires, le profil en S dégage progressivement et de plus en plus l'espace entre le volet et la région 48 au fur et à mesure que le volet 110 tourne dans le sens contraire des aiguilles d'une montre (tel que représenté).

Le volet 110 présentant une première région 11 et une deuxième région 114 est raccordé à l'axe 101 par une région plane 104' (figure 5b) qui peut être décalée vers l'intérieur du canal 6 comme représenté à la figure 5c (repère 104'').

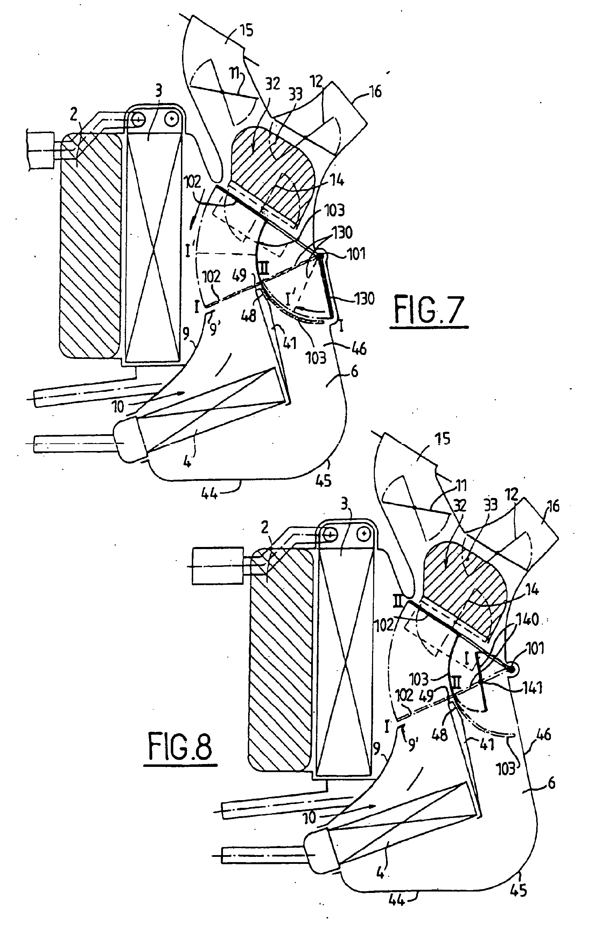

Dans le mode de réalisation de la figure 6, le volet 100 est sensiblement représenté comme aux figures 2 et 3, et la fonction de redirection de l'air sortant du canal de distribution 6 est réalisée non pas dans une région telle que 105 du volet 100, mais par un deuxième volet 120, du type drapeau, mobile entre deux positions I où le volet 120 longe une région 50 de la paroi 46 située en aval de l'axe 101 et une position II, dans laquelle, il vient par exemple en alignement avec la région 102 du volet 100. On peut ainsi régler la position de ce deuxième volet 120 pour obtenir la meilleure efficacité de mélange du flux direct et du flux dérivé. Sur la figure 7, le volet 130 est du type drapeau articulé autour de l'axe 101 mais dans là position I, il vient longer une région 130 de la paroi 46 située en amont de l'axe 101.

A la figure 8, l'orientation de l'air issu du canal de dérivation 6 est assurée par un volet 140 de type papillon dont l'axe 141 est situé dans une région médiane du canal 6, par exemple, comme représenté, dans le plan de la région 102 du volet 100 en sa position I. Dans la position I du deuxième volet 140, celui-ci est sensiblement parallèle à l'axe du canal 6 alors qu'il vient obturer celui-ci dans sa position II.

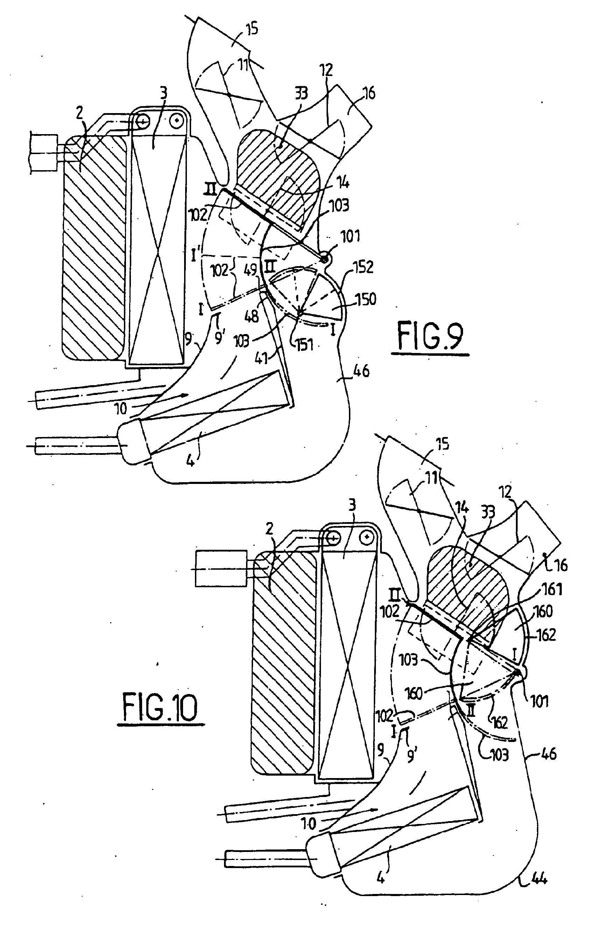

Aux figures 9 et 10, le deuxième volet est du type tambour. A la figure 9, son axe 151 est situé en amont de l'axe 101, et, dans sa position I, le volet 150 est logé dans une région concave 152 de la paroi 46 située en amont de l'axe 101. Dans la position II, le volet 150 obture la sortie du canal 6. A la figure 10, l'axe 161 du volet 160 de type tambour est situé en aval de l'axe 101 et dans sa position I, il est logé dans une région concave 162 de la paroi 46 située en aval de l'axe 101. Dans la position II, le volet 162 obture la sortie du canal 6.

Un avantage du deuxième volet, décrit en relation avec les figures 6 à 10 est qu'en mode « froid » (passage du seul flux direct), il peut être en position fermée, ce qui permet d'obturer le creux 103 du volet de mixage, qui est susceptible de générer des vortex.

L'installation selon l'invention peut être intégrée à un poste de conduite d'un véhicule automobile.

## Revendications

1. Installation de chauffage, notamment de chauffage-climatisation comportant notamment une entrée d'air (2), un élément formant radiateur (4), et un volet de mixage (100, 100', 110) déplaçable entre une première (I) et une deuxième (II) positions extrêmes, la première position correspondant à un passage direct de l'air de l'entrée d'air (2) vers un circuit de distribution d'air pour former un flux d'air direct, et la deuxième position correspondant à un passage dérivé de l'air de l'entrée d'air à travers une ouverture qui alimente l'élément formant radiateur (4), avant d'atteindre le circuit de distribution d'air à travers un canal de dérivation (6) situé en aval de l'élément formant radiateur (4) pour constituer un flux d'air dérivé, des positions intermédiaires entre la première et la deuxième position permettant un mixage dans une chambre de mixage (32) entre deux flux d'air à savoir d'une part, ledit flux d'air direct et d'autre part, ledit flux d'air dérivé qui traverse l'élément formant radiateur (4) et le canal de dérivation (6), **caractérisée en ce que** le volet de mixage (100, 100', 110) présente un axe de rotation (101) disposé au voisinage d'une paroi (46) du canal de dérivation (6) qui est opposée à l'entrée d'air, cette paroi étant une paroi extérieure du canal de dérivation (6), et présente une première (102, 111) et une deuxième (103, 103', 114) région adjacentes, **en ce que** dans la première position (I), la première région (102, 111) obture ladite ouverture d'alimentation de l'élément formant radiateur (4), et la deuxième région (103, 103', 112) obture au moins partiellement ledit canal de dérivation (6), **et en ce que,** dans la deuxième position (II), la première (102, 111) et la deuxième (103, 103', 114) régions coopèrent pour obturer une ouverture de passage direct vers le circuit de distribution d'air (15, 16, 33).

2. Installation selon la revendication 1, **caractérisée en ce que** la première région (102) est plane et **en ce que** la deuxième (103) région présente un profil curviligne qui tourne sa concavité vers ledit canal de dérivation (6).

3. Installation selon la revendication 2, **caractérisée en ce que** le profil de la deuxième région (103) est au moins en partie un arc de cercle.

4. Installation selon une des revendications précédentes, **caractérisée en ce qu'**elle présente un évaporateur (3) traversé par de l'air provenant de l'entrée d'air.

5. Installation selon la revendication 4, **caractérisée en ce que** dans ladite première position (I), la première région (102) vient en butée d'une part, sur une première extrémité (9') d'une paroi qui forme un rétrécissement du passage d'air à la sortie de l'évaporateur (3), et d'autre part à l'extrémité (49) d'une cloison séparatrice (41) bordant le canal de distribution (6), cette dernière mise en butée intervenant au voisinage immédiat du point de départ (105) de la deuxième région (103) du volet de mixage (100).

6. Installation selon une des revendications 4 ou 5, **caractérisée en ce que**, dans ladite deuxième position (II), l'extrémité (107) de la première région (102) vient en butée sur une deuxième extrémité (31) d'une paroi (9) qui forme un rétrécissement du passage d'air à la sortie d'un évaporateur (3).

7. Installation selon une des revendications 5 ou 6, **caractérisée en ce que** ladite paroi (9) présente un contour curviligne.

8. Installation selon une des revendications précédentes, **caractérisée en ce que** la première (102) et la deuxième (103) régions du volet de mixage (100) sont reliées à l'axe de rotation (101) dudit volet (100) par une région plate (104).

9. Installation selon une des revendications précédentes, **caractérisée en ce qu'**elle présente un moyen (105, 120, 130, 140, 150, 160) pour orienter le flux d'air dérivé de manière à faciliter son mélange avec le flux d'air direct dans au moins une position intermédiaire du volet de mixage (100, 100', 110).

10. Installation selon la revendication 9, **caractérisée en ce que** ledit moyen d'orientation est un déflecteur (105) solidaire du volet de mixage (100, 100', 110) et s'étendant à partir de son axe de rotation (101).

11. Installation selon la revendication 9, **caractérisée en ce que** ledit moyen d'orientation est un deuxième volet (120, 130) dont l'axe de rotation est le même que celui (101) du volet de mixage (100, 100', 110).

12. Installation selon la revendication 9, **caractérisée en ce que** ledit moyen d'orientation est un deuxième volet (140, 150, 160) dont l'axe de rotation est décalé par rapport à celui (101) du volet de mixage (100, 100', 110).

13. Installation selon une des revendications 11 ou 12, **caractérisée en ce que** le deuxième volet (120, 130) est du type drapeau.

14. Installation selon la revendication 13, **caractérisée en ce que** dans la première position (I) du deuxième volet (120), son extrémité qui est opposée à son axe de rotation constitue un bord de fuite.

15. Installation selon la revendication 13, **caractérisée en ce que** dans la première position du deuxième volet (130), son extrémité opposée à son axe de rotation constitue un bord d'attaque.

16. Installation selon la revendication 12, **caractérisée en ce que** le deuxième volet (140) est du type papillon.

17. Installation selon la revendication 12, **caractérisée en ce que** le deuxième volet (150, 160) est du type tambour.

18. Installation selon la revendication 17, **caractérisée en ce que** l'axe (151) du deuxième volet (150) est disposé en amont de l'axe (101) du volet de mixage (100, 100', 110), dans le sens de propagation du flux d'air dérivé.

19. Installation selon la revendication 17, **caractérisée en ce que** l'axe (161) du deuxième volet (160) est disposé en aval de l'axe (101) du volet de mixage (100, 100', 110), dans le sens de propagation du flux d'air dérivé.

20. Installation selon une des revendications précédentes, **caractérisée en ce que** l'axe de rotation (101) du volet de mixage (100, 100', 110) est espacé de ladite paroi (46) du canal de dérivation (6) de manière à laisser passer une partie du flux d'air dérivé, entre ledit axe de rotation (101) et ledit bord (46).

21. Poste de conduite d'un véhicule automobile **caractérisé en ce qu'**il comporte une installation selon une des revendications précédents.

## Patentansprüche

1. Heizungsanlage, insbesondere Heizungs-Klimaanlage, die vor allem einen Lufteinlass (2) umfasst, ein Element, das einen Radiator (4) bildet und eine Mischklappe (100, 100', 110), die zwischen einer ersten (I) und einer zweiten (II) Außenposition verschiebbar ist, wobei die erste Position einem direkten Durchlass der Luft des Lufteinlasses (2) zu einem Luftverteilungskreis entspricht, um einen direkten Luftstrom zu bilden und die zweite Position einem abgeleiteten Durchlass der Luft des Lufteinlasses durch eine Öffnung entspricht, die das Element, das den Radiator (4) bildet, versorgt, vor Erreichen des Luftverteilungskreises durch einen Seitenkanal (6), der sich unterhalb des Elementes, das den Radiator (4) bildet, befindet, um einen abgeleiteten Luftstrom zu bilden, Zwischenpositionen zwischen der ersten und der zweiten Position, die eine Mischung in einer Mischkammer (32) zwischen zwei Luftströmen ermöglichen und zwar einerseits dem besagten direkten Luftstrom und andererseits dem besagten abgeleiteten Luftstrom, der das Element, das den Radiator (4) bildet, durchfließt und den Seitenkanal (6), **dadurch gekennzeichnet, dass** die Mischklappe (100, 100', 110) eine Drehachse (101) aufweist, die sich in der Nähe einer Kante (46) des Seitenkanals (6) befindet, wobei die Kante eine äußere Kante des Seitenkanal (6) ist, der sich gegenüber dem Lufteinlass befindet und einen ersten (102, 111) und einen zweiten (103, 103', 114) angrenzenden Bereich aufweist, dass in der ersten Position (I), der erste Bereich (102, 111) die besagte Einfüllöffnung des Elementes, das den Radiator (4) bildet, verschließt und der zweite Bereich ( 103, 103', 112) zumindest teilweise den besagten Seitenkanal (6) verschließt und dass in der zweiten Position (II) der erste (102, 111) und der zweite (103, 103', 114) Bereich zusammenarbeiten, um eine Öffnung für den direkten Durchlass zum Luftverteilungskreis (15, 16, 33) zu verschließen.

2. Anlage nach Anspruch 1, **dadurch gekennzeichnet, dass** der erste Bereich (102) flach ist und dass der zweite Bereich (103) ein gekrümmtes Profil aufweist, das seine Vertiefung zum besagten Seitenkanal (6) dreht.

3. Anlage nach Anspruch 2, **dadurch gekennzeichnet, dass** das Profil des zweiten Bereiches (103) zumindest teilweise ein Kreisbogen ist.

4. Anlage nach einem der vorherigen Ansprüche, **dadurch gekennzeichnet, dass** sie einen Verdampfer (3) umfasst, durch den Luft strömt, die aus dem Lufteinlass kommt.

5. Anlage nach Anspruch 4, **dadurch gekennzeichnet, dass** in der besagten ersten Position (I), der erste Bereich (102) einerseits an einem ersten Ende (9') einer Wand anschlägt, die eine Verengung des Luftdurchlasses am Ausgang des Verdampfers (3) bildet und andererseits am Ende (49) einer Trennwand (41), die den Verteilungskanal (6) begrenzt, wobei letztere anschlägt und in der unmittelbaren Nähe des Ausgangspunktes (5) des zweiten Bereiches (103) der Mischklappe (100) eingreift.

6. Anlage nach einem der Ansprüche 4 oder 5, **dadurch gekennzeichnet, dass** in der besagten zweiten Position (II), das Ende (107) des ersten Bereiches (102) an einem zweiten Ende (31) einer Wand (9) anschlägt, die eine Verengung des Luftdurchlasses am Ausgang eines Verdampfers (3) bildet.

7. Anlage nach einem der Ansprüche 5 oder 6, **dadurch gekennzeichnet, dass** die besagte Wand (9) eine gekrümmte Kontur aufweist.

8. Anlage nach einem der vorherigen Ansprüche, **dadurch gekennzeichnet, dass** der erste (102) und der zweite (103) Bereich der Mischklappe (100) mit der Drehachse (101) der besagten Klappe (100) durch einen flachen Bereich (104) verbunden sind.

9. Anlage nach einem der vorherigen Ansprüche, **dadurch gekennzeichnet, dass** sie ein Mittel (105, 120, 130, 140, 150, 160) umfasst, um den abgeleiteten Luftstrom so auszurichten, dass seine Mischung mit dem direkten Luftstrom in mindestens einer Zwischenposition der Mischklappe (100, 100', 110) ermöglicht wird.

10. Anlage nach Anspruch 9, **dadurch gekennzeichnet, dass** das besagte Ausrichtungsmittel ein Leitwerk (105) ist, das fest mit der Mischklappe (100, 100', 110) verbunden ist und sich von seiner Drehachse (101) aus ausdehnt.

11. Anlage nach Anspruch 9, **dadurch gekennzeichnet, dass** das besagte Ausrichtungsmittel eine zweite Klappe (120, 130) ist, deren Drehachse der Achse (101) der Mischklappe (100, 100', 110) entspricht.

12. Anlage nach Anspruch 9, **dadurch gekennzeichnet, dass** das besagte Ausrichtungsmittel eine zweite Klappe (140, 150, 160) ist, deren Drehachse in Bezug auf die Achse (101) der Mischklappe (100, 100', 110) versetzt ist.

13. Anlage nach einem der Ansprüche 11 oder 12, **dadurch gekennzeichnet, dass** die zweite Klappe (120, 130) eine Art Schablonenarm ist.

14. Anlage nach Anspruch 13, **dadurch gekennzeichnet, dass** in der ersten Position (I) der zweiten Klappe (120) ihr Ende, das gegenüber der Drehachse liegt, eine Austrittskante bildet.

15. Anlage nach Anspruch 13, **dadurch gekennzeichnet, dass** in der ersten Position der zweiten Klappe (130) ihr Ende, das gegenüber der Drehachse liegt, eine Eintrittskante bildet.

16. Anlage nach Anspruch 12, **dadurch gekennzeichnet, dass** die zweite Klappe (140) eine Art Drosselklappe ist.

17. Anlage nach Anspruch 12, **dadurch gekennzeichnet, dass** die zweite Klappe (150, 160) eine Art Trommel ist.

18. Anlage nach Anspruch 17, **dadurch gekennzeichnet, dass** die Achse (151) der zweiten Klappe (150) oberhalb der Achse (101) der Mischklappe (100, 100', 110) angeordnet ist, in der Richtung der Ausbreitung des abgeleiteten Luftstroms.

19. Anlage nach Anspruch 17, **dadurch gekennzeichnet, dass** die Achse (161) der zweiten Klappe (160) unterhalb der Achse (101) der Mischklappe (100, 100', 110) angeordnet ist, in der Richtung der Ausbreitung des abgeleiteten Luftstroms.

20. Anlage nach einem der vorherigen Ansprüche, **dadurch gekennzeichnet, dass** die Drehachse (101) der Mischklappe (100, 100', 110) mit einem Zwischenraum zu der besagten Kante (46) des Seitenkanals (6) angeordnet ist und zwar so, dass ein Teil des abgeleiteten Luftstroms zwischen der besagten Drehachse(101) und der besagten Kante (46) durchgelassen wird.

21. Fahrerstand eines Kraftfahrzeugs, **dadurch gekennzeichnet, dass** er eine Anlage nach einem der vorherigen Ansprüche umfasst.

## Claims

1. Heating installation, particularly for heating-air conditioning, particularly comprising an air inlet (2), an element forming a radiator (4), and a mixing flap (100, 100', 110) that can be moved between a first (I) and a second (II) extreme positions, the first position corresponding to a direct air passage from the air inlet (2) to an air distribution circuit to form a direct air flow, and the second air position corresponding to a diverted air passage from the air inlet via an opening which feeds the element forming a radiator (4), before reaching the air distribution circuit via a bypass duct (6) located downstream from the element forming a radiator (4) to form a diverted air flow, intermediate positions between the first and the second position enabling mixing in a mixing chamber (32) between two air flows i.e., firstly, said direct air flow and, secondly, said diverted air flow passing through the element forming a radiator (4) and the bypass duct (6), **characterised in that** the mixing flap (100, 100', 110) comprises a rotation axis (101) arranged in the vicinity of one edge (46) of the bypass duct (6) which is opposite the air inlet, this edge being an external edge of the bypass duct (6), and comprises a first (102, 111) and a second (103, 103', 114) adjacent region, **in that** in the first position (I), the first region (102, 111) seals said feed opening of the element forming a radiator (4), and the second region (102, 111) seals said feed opening of the element forming a radiator (4), and the second region (103, 103', 112) seals at least partially said bypass duct (6), and **in that**, in the second position (II), the first (102, 111) and the second (103, 103', 114) regions cooperate to seal a direct passage opening to the air distribution circuit (15, 16, 33).

2. Installation according to claim 1, **characterised in that** the first region (102) is plane and **in that** the second (103) region displays a curved profile which rotates its concavity towards said bypass duct (6).

3. Installation according to claim 2, **characterised in that** the profile of the second region (103) is at least partially an arc of a circle.

4. Installation according to any of the above claims, **characterised in that** it comprises an evaporator (3) with air from the air inlet passing through it.

5. Installation according to claim 4, **characterised in that** in said first position (I), the first region (102) comes to a stop firstly on a first end (9') of a wall which forms a narrowing of the air passage at the outlet of the evaporator (3), and secondly at the end (49) of a separating partition (41) bordering the distribution duct (6), the latter, when at a stop, arriving in the immediate vicinity of the starting point (105) of the second region (103) of the mixing flap (100).

6. Installation according to any of claims 4 or 5, **characterised in that**, in said second position (II), the end (107) of the first region (102) comes to a stop on a second end (31) of a wall (9) which forms a narrowing of the air passage at the outlet of an evaporator (3).

7. Installation according to any of claims 5 or 6, **characterised in that** said wall (9) displays a curved outline.

8. Installation according to any of the above claims, **characterised in that** the first (102) and the second (103) regions of the mixing flap (100) are connected to the rotation axis (101) of said flap (100) by a flat region (104).

9. Installation according to any of the above claims, **characterised in that** it comprises means (105, 120, 130, 140, 150, 160) to orient the diverted air flow so as to facilitate the mixing thereof with the direct air flow in at least one intermediate position of the mixing flap (100, 100', 110).

10. Installation according to claim 9, **characterised in that** said orientation means is a deflector (105) attached to the mixing flap (100, 100', 110) and extending from its rotation axis (101).

11. Installation according to claim 9, **characterised in that** said orientation means is a second flap (120, 130) wherein the rotation axis is the same as that (101) of the mixing flap (100, 100', 110).

12. Installation according to claim 9, **characterised in that** said orientation means is a second flap (140, 150, 160) wherein the rotation axis is offset with respect to that (101) of the mixing flap (100, 100', 110).

13. Installation according to any of claims 11 or 12, **characterised in that** the second flap (120, 130) is of the flag type.

14. Installation according to claim 13, **characterised in that** in the first position (I) of the second flap (120), its end which is opposite its rotation axis forms a trailing edge.

15. Installation according to claim 13, **characterised in that** in the first position (I) of the second flap (130), its end opposite its rotation axis forms a leading edge.

16. Installation according to claim 12, **characterised in that** the second flap (140) is of the butterfly type.

17. Installation according to claim 12, **characterised in that** the second flap (150, 160) is of the drum type.

18. Installation according to claim 17, **characterised in that** the axis (151) of the second flap (150) is arranged upstream from the axis (101) of the mixing flap (100, 100', 110), in the direction of propagation of the diverted air flow.

19. Installation according to claim 17, **characterised in that** the axis (161) of the second flap (160) is arranged downstream from the axis (101) of the mixing flap (100, 100', 110), in the direction of propagation of the diverted air flow.

20. Installation according to any of the above claims, **characterised in that** the rotation axis (101) of the mixing flap (100, 100', 110) is at a distance from said edge (46) of the bypass duct (6) so as to allow a part of the diverted air flow to pass, between said rotation axis (101) and said edge (46).

21. Motor vehicle control panel **characterised in that** it comprises an installation according to any of the above claims.
